# EUROPÄISCHE PATENTSCHRIFT

(11) **EP 1 066 744 B1**
(45) Veröffentlichungstag und Bekanntmachung des Hinweises auf die Patenterteilung: **09.02.2005**
(21) Anmeldenummer: 00112984.0
(22) Anmeldetag: 21.06.2000
(51) Int. Cl.: A01B 73/00

(54) **Wagen zum Transport eines Schneidwerks**
Header transport trailer
Chariot de transport pour tablier de coupe

(30) Priorität: 07.07.1999 DE 19931281
(43) Veröffentlichungstag der Anmeldung: 10.01.2001
(73) Patentinhaber: DEERE & COMPANY, Moline, Illinois 61265-8098 (US)
(72) Erfinder: Braunhardt, Klaus, 66482 Zweibrücken (DE); Welsch, Thomas, 66453 Gersheim (DE); Riedinger, Franz Wilhelm, 66424 Homburg-Einöd (DE); Zürn, Rolf, 74214 Schöntal (DE); Bauer, Ewald, 74219 Möckmühl (DE); Becker, Klaus E., East Moline, IL 61244 (US)
(74) Vertreter: Holst, Sönke, Dr.

(56) Entgegenhaltungen:
- IT-B- 1 223 703
- US-A- 4 371 299
- US-A- 4 770 577
- US-A- 4 834 598
- US-A- 5 529 447

## Beschreibung

Die Erfindung betrifft einen Wagen zum Transport eines Schneidwerks und eines Vorsatzschneidwerks, insbesondere für die Rapsernte, mit einer ersten Ablagefläche, auf der das Schneidwerk ablegbar ist, und einer zweiten Ablagefläche, auf der das Vorsatzschneidwerk getrennt vom Schneidwerk ablegbar ist.

Zur Ernte von Raps mit einem Mähdrescher sind sogenannte Raps-Vorsatzschneidwerke bekannt, die an normalen Schneidwerken anbringbar sind und eine Schneidtischverlängerung mit angetriebenen Schneidmessern, die das Schneidwerk in der Vortriebsrichtung des Mähdreschers verlängert, sowie beidseits des Schneidtisches angeordnete Seitenschneidwerke aufweisen. Die Schneidtischverlängerung und die Seitenschneidwerke sind zweckmäßig, um den Raps, der ein zusammenhängendes Buschwerk bildet, zu zerschneiden.

Da die Schneidwerke gewöhnlich breiter sind, als von der Straßenverkehrsordnung zur Teilnahme am Straßenverkehr erlaubt ist, werden sie in der Regel auf einem an den Mähdrescher gehängten Wagen zu einem Feld transportiert, wo sie dann an der Frontseite des Mähdreschers befestigt werden. Sollen Raps-Vorsatzschneidwerke eingesetzt werden, sind im Stande der Technik drei Möglichkeiten zum Transport bekannt: Zunächst können die Raps-Vorsatzschneidwerke auf einem separaten Wagen transportiert werden. Außerdem können sie, falls sie an einem Schneidwerk befestigt sind, gemeinsam mit dem Schneidwerk auf einem Wagen befördert werden. Schließlich kann das Schneidwerk zum Ernteeinsatz mittels hydraulischer Zylinder verlängerbar sein, und Füllbleche und die Seitenschneidwerke können an der Verlängerung fixiert werden. Die Seitenschneidwerke und die Füllbleche werden getrennt transportiert.

Es macht die Rapsernte aber sehr unflexibel, daß der Betreiber einer Erntemaschine ein Raps-Vorsatzschneidwerk gemeinsam mit dem Schneidwerk im daran befestigten Zustand transportieren muß. Da es fast unmöglich ist, bekannte Raps-Vorsatzschneidwerke auf einem Feld an einem Schneidwerk anzubringen, muß sich der Betreiber bereits morgens entscheiden, welches Erntegut er während des Tages einbringen will. Da Raps gleichzeitig mit anderen Gütern, wie Gerste und Weizen, reift, ist es nachteilig, daß es nicht möglich ist, zwischen den unterschiedlichen Gütern zu wechseln, ohne auf eine feste, ebene Oberfläche zurückkehren zu müssen, um das Raps-Vorsatzschneidwerk anzubringen oder zu entfernen.

Aus der US 4 770 577 A ist ein Wagen bekannt geworden, der zwei an einem fahrbaren Gestell aufgehängte Ladeböden aufweist, auf denen jeweils ein Schneidwerk für einen Mähdrescher abgelegt werden kann. Der Wagen kann zum Transport des Schneidwerks hinter einen Mähdrescher gekoppelt werden. Es wäre möglich, auf diesem Wagen ein Schneidwerk und ein Vorsatzschneidwerk getrennt voneinander abzulegen. Da die Ladeböden voneinander durch einen vertikalen Träger getrennt sind, müsste allerdings zuerst das Vorsatzschneidwerk auf einer Seite abgelegt und vom Schneidwerk getrennt werden. Problematisch wäre insbesondere der nachfolgende Wiederanbau des Vorsatzschneidwerks, da das Schneidwerk mit dem es tragenden Mähdrescher genau vor dem Vorsatzschneidwerk positioniert werden müsste.

Das der Erfindung zugrunde liegende Problem wird in den geschilderten Nachteilen des Standes der Technik gesehen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Kerngedanke der Erfindung besteht darin, einen Wagen bereitzustellen, der zwei Ablageflächen aufweist. Auf einer ersten Ablagefläche ist das Schneidwerk ablegbar, während das Vorsatzschneidwerk, das insbesondere für die Rapsernte benötigt wird, getrennt vom Schneidwerk auf einer zweiten Ablagefläche ablegbar ist. Die erste Ablagefläche und die zweite Ablagefläche sind auf dem Wagen relativ zueinander bewegbar gelagert. Die Erfindung erlaubt somit, das Schneidwerk und das Vorsatzschneidwerk unabhängig voneinander auf dem Wagen abzulegen und zu transportieren. Das Schneidwerk und das Vorsatzschneidwerk sind auf dem Wagen relativ zueinander bewegbar angeordnet, so daß das Vorsatzschneidwerk in Richtung auf das Schneidwerk zu bewegbar und daran fixierbar ist. Ein auf der zweiten Ablagefläche abgelegtes Vorsatzschneidwerk kann somit auf einfache Weise vor das Schneidwerk verbracht werden, das auf der ersten Ablagefläche abgelegt ist, und schließlich daran befestigt werden. Eine Trennung von Schneidwerk und Vorsatzschneidwerk erfolgt analog, nur in umgekehrter Richtung.

Auf diese Weise wird es möglich, das Vorsatzschneidwerk auch während des Einsatzes auf einem Feld mit dem Schneidwerk zu verbinden und davon zu trennen, da der Transportwagen eine hinreichend feste und ebene Ablagefläche für das Vorsatzschneidwerk bereitstellt.

Der Wagen ist zweckmäßigerweise mit einer Vorrichtung zum Ankoppeln an ein Fahrzeug versehen. Als Zugfahrzeug kann eine Erntemaschine, wie beispielsweise ein Mähdrescher, aber auch ein Traktor dienen.

Es bietet sich an, das Schneidwerk und/oder das Vorsatzschneidwerk schwimmend oder federnd auf dem Wagen zu lagern, was durch die Aufhängung der jeweiligen Ablagefläche am Wagen mittels wenigstens einer Feder erfolgen kann. Der Vorteil liegt darin, daß eventuelle Ungenauigkeiten beim Positionieren des Schrägförderers eines Mähdreschers vor dem Schneidwerk durch die Federung ausgeglichen werden, so daß das Ankoppeln erleichtert ist. Auch das Ankoppeln des Vorsatzschneidwerks an das Schneidwerk ist durch die Federung erleichtert.

Bezüglich der Positionierung der ersten und zweiten Ablagefläche am Wagen bestehen erfindungsgemäß verschiedene Möglichkeiten. Zum einen kann die erste Ablagefläche bezüglich der Fahrtrichtung des Wagens neben der zweiten Ablagefläche angeordnet sein, was einen relativ niedrigen Schwerpunkt ermöglicht, jedoch zu einer größeren Breite des Wagens führt. Zum anderen kann die erste Ablagefläche oberhalb bzw. unterhalb der zweiten Ablagefläche sein, so daß die Breite des Wagens recht gering ist, aber der Schwerpunkt etwas höher liegt.

Die Relativbewegung zwischen erster und zweiter Ablagefläche kann eine Schwenk- und/oder Verschiebebewegung sein.

Weiterhin kann ein Antrieb vorgesehen sein, mit dem die Relativbewegung erzielt wird. Der Antrieb kann von einem Zugfahrzeug, insbesondere Mähdrescher mit Energie versorgt werden; im speziellen kann er elektromotorisch, mit einem Hydraulikmotor oder -zylinder oder mechanisch erfolgen. Ein Elektromotor kann auch durch einen auf dem Wagen angeordneten Akkumulator mit Energie versorgt werden, der durch eine Solarzelle und/oder eine mit einem Rad des Wagens in Antriebsverbindung stehende Lichtmaschine aufgeladen wird. Alternativ ist ein manueller Antrieb denkbar, der durch eine Bedienungsperson beispielsweise mittels einer Kurbel erfolgt.

Es wäre auch denkbar, nur das Schneidwerk und/oder das Vorsatzschneidwerk relativ zu der ihm zugeordneten Ablagefläche in Richtung auf das Vorsatzschneidwerk bzw. Schneidwerk zu bewegen, während die Ablageflächen nicht bewegt werden. Eine derartige Lösung ist einfach und preiswert realisierbar. Der Antrieb bewegt dann das zu verschiebende oder anderweitig zu bewegende Schneidwerk und/oder Vorsatzschneidwerk.

Insbesondere bei einer federnd oder schwimmend am Wagen befestigten ersten und/oder zweiten Ablagefläche, oder falls diese relativ zueinander bewegbar sind, bietet sich an, sie während des Transports am Wagen zu arretieren. Auch das Schneidwerk und/oder das Vorsatzschneidwerk können beim Transport an der jeweiligen Ablagefläche arretiert werden.

Schließlich ist vorgeschlagen, die erste und/oder zweite Ablagefläche in einer relativ zur Fahrtrichtung des Wagens seitlich geneigten Ebene anzuordnen. Der Neigungswinkel ist vorzugsweise derart gewählt, daß er das Ankoppeln des Schneidwerks an einen Schrägförderer eines Mähdreschers, bzw. eines Vorsatzschneidwerks an einem Schrägförderer befestigten Schneidwerk, ermöglicht.

In den Zeichnungen sind drei nachfolgend näher beschriebene Ausführungsbeispiele dargestellt. Es zeigt:
- Fig. 1: eine Seitenansicht eines Mähdreschers;
- Fig. 2: eine Frontansicht einer ersten Ausführungsform eines Wagens, die nicht unter den Umfang des Anspruchs 1 fällt,
- Fig. 3: eine Frontansicht einer zweiten Ausführungsform eines Wagens, und
- Fig. 4: eine Frontansicht einer dritten Ausführungsform eines Wagens.

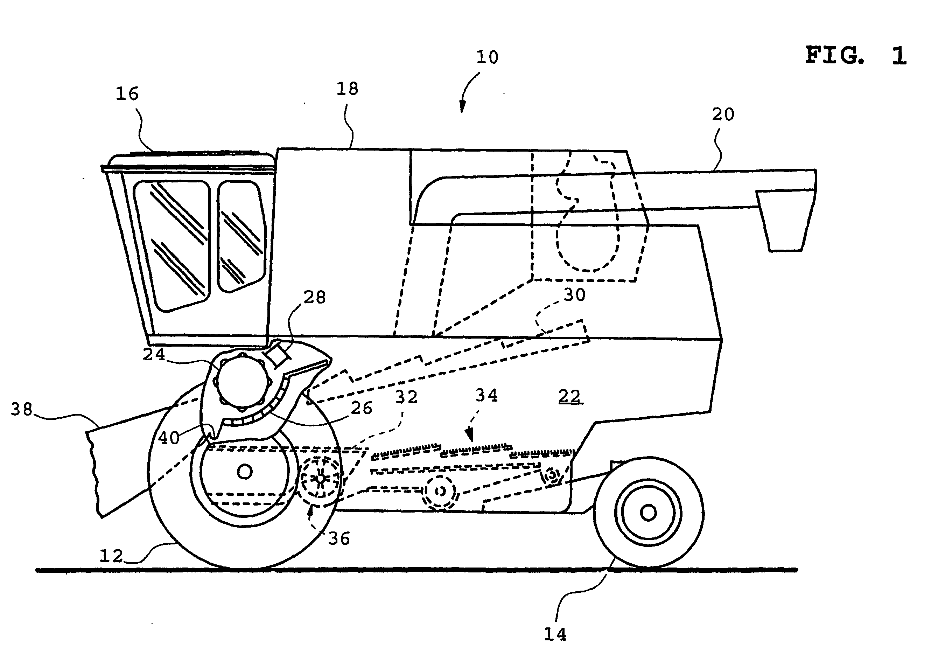

Eine in Figur 1 gezeigte Erntemaschine in der Form eines Mähdreschers 10 ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer Erntegutbergungsvorrichtung vom Boden aufgenommen worden ist.

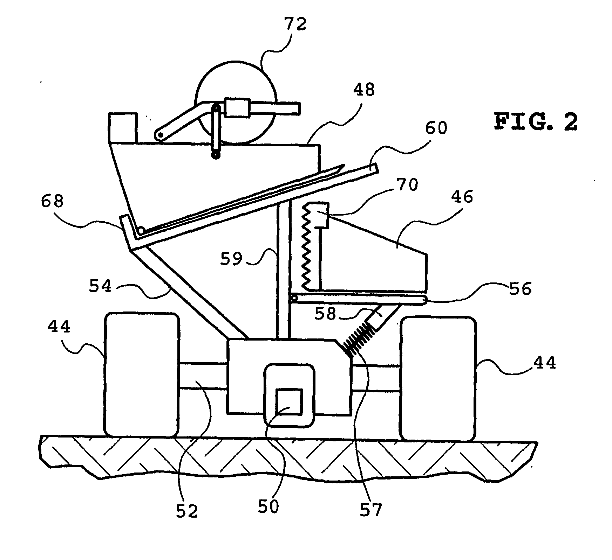

In Figur 2 ist eine derartige Erntegutbergungsvorrichtung in Form eines Schneidwerks 48 wiedergegeben, das an der Frontseite des Schrägförderers 38 fixierbar ist. Das Schneidwerk 48 weist in an sich bekannter Weise eine Haspel 72 und ein Mähwerk auf. Da das Schneidwerk 48 relativ breit ist, ist es in Figur 2 zum Transport auf einer Straße auf einem Wagen 42 abgelegt worden. Zum Erntebetrieb fährt der Bediener den Mähdrescher 10 an die in Figur 2 links eingezeichnete Seite des Wagens 42 und verschwenkt den Schrägförderer 38 in an sich bekannter Weise mittels eines in Figur 1 nicht eingezeichneten Hydraulikzylinders, so daß eine mechanische Kopplung zwischen Schrägförderer 38 und Schneidwerk 48 hergestellt werden kann. Anschließend kann das Schneidwerk 48 angehoben und vom Wagen 42 entnommen werden. Der Mähdrescher 10 mit dem Schneidwerk 48 kann dann zum Erntebetrieb eingesetzt werden. Das Ablegen des Schneidwerks 48 auf dem Wagen 42 geschieht in umgekehrter Reihenfolge. Der Wagen ist mit einer Zugöse 50 ausgestattet, mit der er an der Rückseite des Mähdreschers 10 angehängt werden kann.

Der Wagen 48 baut sich auf einem Rahmen 52 mit beidseits angeordneten Rädern 44 auf, die bezüglich der (in Fahrtrichtung betrachteten) Längsabmessung des Wagens 42 etwa mittig angeordnet sind. Es wäre auch denkbar, vier oder mehr Räder 44 zu verwenden. An dem Rahmen 52 ist eine erste Strebe 59 befestigt, die sich etwa vertikal nach oben erstreckt, sowie eine zweite Strebe 54, die schräg nach links oben verläuft. Die beiden Streben 54, 59 stützen eine erste Ablagefläche 60 ab, auf der das Schneidwerk 48 abgelegt ist. Die erste Ablagefläche 60 ist leicht seitlich geneigt, so daß sich die Seite des Schneidwerks 48, an der der Schrägförderer 38 befestigt wird, an einer Kante 68 am unteren - in Figur 2 links eingezeichneten - Rand der ersten Ablagefläche 60 abstützt, die sich im rechten Winkel zur ersten Ablagefläche 60 nach links oben erstreckt. Die Kante 68 bildet somit eine Abstützung für das Schneidwerk 48. Selbstverständlich können mehrere Streben 54, 59 in Fahrtrichtung des Wagens 42 hintereinander mit dem Rahmen 52 verbunden sein, der sich ebenfalls in der Fahrtrichtung des Wagens 42 erstreckt.

In Figur 2 ist am Wagen 42 eine zweite Ablagefläche 56 vorgesehen, die unterhalb der ersten Ablagefläche 56 angeordnet ist. Die zweite Ablagefläche 56 ist an der ersten Strebe 59 angelenkt und über eine dritte Strebe 58 mit einer Feder 57 verbunden, die anderenends am Rahmen 52 befestigt ist. Im Ergebnis ist die zweite Ablagefläche 56 federnd am Wagen 42 befestigt, was das Anbringen eines auf der zweiten Ablagefläche 56 abgelegten Vorsatzschneidwerks 46 am Schneidwerk 48 erleichtert. Auch bezüglich der Fahrtrichtung des Wagens 42 kann die zweite Ablagefläche 56 federnd aufgehängt sein, was in der Figur 2 aber nicht dargestellt ist. Das Vorsatzschneidwerk 46 besteht in an sich bekannter Weise aus einer Schneidtischverlängerung mit angetriebenen Schneidmessern und seitlich daran angebrachten Seitenschneidwerken 70. Es ist insbesondere für die Ernte von Raps geeignet. Soll Raps geerntet werden, fährt der Bediener den Mähdrescher 10 mit am Schrägförderer 38 befestigtem Schneidwerk 48 (in Figur 2 von rechts) vor die zweite Ablagefläche 56 in eine Position, in der das Schneidwerk 48 und das Vorsatzschneidwerk 46 mechanisch aneinander gekoppelt werden können. Das "Einfädeln" des Schneidwerks 48 in das Vorsatzschneidwerk 46 wird durch die federnde Aufhängung der zweiten Ablagefläche 56 entscheidend erleichtert. Nach dem Befestigen des Vorsatzschneidwerks 46 am Schneidwerk 48 wird der Schrägförderer 38 leicht angehoben, und das Vorsatzschneidwerk 46 vom Wagen 42 entnommen. Nach der Ernte kann das Vorsatzschneidwerk 46 in umgekehrter Reihenfolge wieder auf der zweiten Ablagefläche 56 abgelegt werden. Der Wagen 42 ermöglicht also, das Vorsatzschneidwerk 46 auch auf einem Feld, auf dem keine feste, ebene Ablagefläche vorhanden ist, am Schneidwerk 48 anzubringen und davon zu lösen. Es wäre auch denkbar, das Schneidwerk 48 mit daran befestigtem Vorsatzschneidwerk 46 auf der ersten Ablagefläche 60 abzulegen, falls auch nach einem Straßentransport die Ernte von Raps beabsichtigt ist.

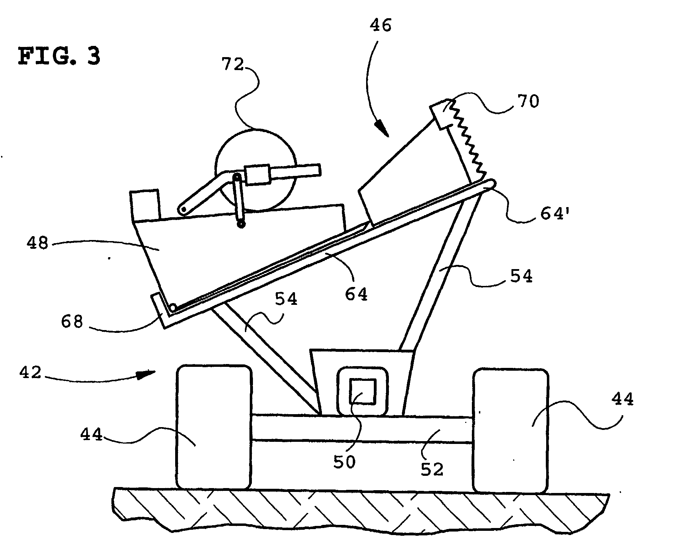

In Figur 3 ist ein Wagen 42 nach einer zweiten Ausführungsform der Erfindung dargestellt. Eine einteilige, relativ breite Ablagefläche 64, 64' dient sowohl zum Ablegen des Schneidwerks 48 als auch des Vorsatzschneidwerks 46. Die erste Ablagefläche 64 wird somit durch einen ersten Teil der einteiligen Ablagefläche gebildet, während ihr zweiter Teil die zweite Ablagefläche 64' bildet. Die Ablagefläche 64, 64' ist wie in Figur 2 leicht (relativ zur Fahrtrichtung des Wagens 42) nach links geneigt und an ihrem links eingezeichneten, unteren Ende mit einer sich rechtwinklig nach oben erstreckenden Kante 68 versehen, an der sich das Schneidwerk 48 abstützt. Die Ablagefläche 64, 64' ist über zwei Streben 54 mit dem Rahmen 52 verbunden, wobei ebenfalls mehrere Streben 54 in Vorwärtsfahrtrichtung des Wagens 42 hintereinander angeordnet sein können; auch können zwei Räder 44, wie in Figur 3 eingezeichnet, oder vier Räder 44 mit dem Rahmen 52 verbunden sein.

Das Anbringen des Schneidwerks 48 am Schrägförderer 38 (und das Abnehmen davon) erfolgt in der Weise, die schon bezüglich Figur 2 erläutert wurde. Soll das Vorsatzschneidwerk 46 montiert werden, wird das Schneidwerk 48 unter Verwendung des Schrägförderers 38 des Mähdreschers 10 derart vor dem Vorsatzschneidwerk 46 positioniert, daß die mechanische Verbindung hergestellt werden kann. Das Lösen des Vorsatzschneidwerks 46 erfolgt in umgekehrter Reihenfolge, wobei ebenfalls möglich ist, das Schneidwerk 48 mit daran befestigtem Vorsatzschneidwerk 46 auf der Ablagefläche 64 abzulegen, falls das Vorsatzschneidwerk auch nach dem Transport auf dem Wagen wieder benötigt wird. Es können außerdem - in der Zeichnung nicht dargestellte - Vorrichtungen zum Arretieren des Schneidwerks 48 und/oder des Vorsatzschneidwerks 46 am Wagen vorgesehen sein. In diesem Fall kann die Arretierung des Vorsatzschneidwerks 46 gelöst werden, so daß es durch die Schwerkraft auf der zweiten Ablagefläche 64' zum Schneidwerk 48 hin gleitet, und daran befestigt werden kann. Das Schneidwerk 48 kann dabei am Schrägförderer 38 des Mähdrescher 10 befestigt oder davon gelöst sein. Zum Verschieben des Vorsatzschneidwerks 46 kann auch ein separater Antrieb, wie in der dritten Ausführungsform der Erfindung, vorgesehen sein, der es auch wieder entgegen der Schwerkraft vom Schneidwerk 48 trennen kann. Das Vorsatzschneidwerk 46 kann aber auch unter Verwendung des Schrägförderers 38 in der in Figur 3 eingezeichneten Position abgelegt werden, was einen separaten Antrieb erübrigt.

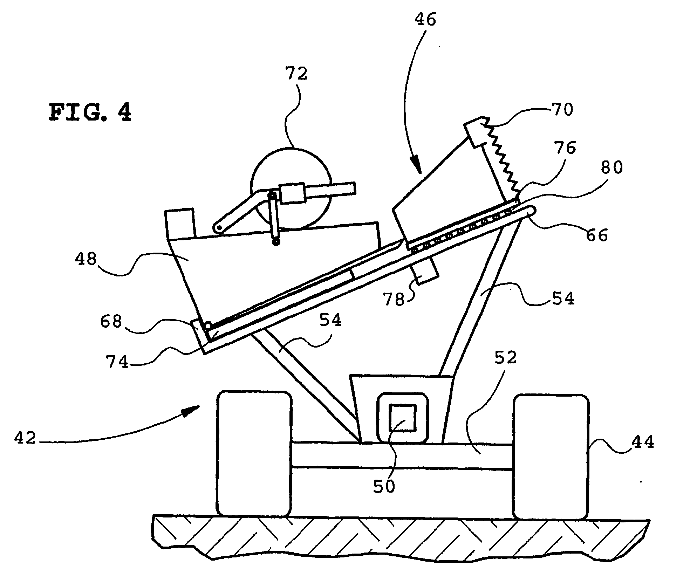

In Figur 4 ist ein Wagen 42 nach einer dritten Ausführungsform der Erfindung wiedergegeben, der in seinem grundsätzlichen Aufbau dem Wagen 42 der zweiten Ausführungsform entspricht. Er weist eine (bezüglich der Fahrtrichtung des Wagens 42) seitlich etwas nach links geneigte Stützfläche 66 auf, die über Streben 54 mit dem Rahmen des Wagens 42 verbunden ist, an dem zwei Räder 44 angeordnet sind. Am unteren, in Figur 4 links eingezeichneten Rand der Stützfläche 66 erstreckt sich eine Kante 68 rechtwinklig nach oben; sie dient der Abstützung des Schneidwerks 48, das auf einer ersten Ablagefläche 74 abgelegt ist, die oberhalb der Stützfläche 66 angeordnet ist und sich von der Kante 68 bis etwa zur Mitte der Stützfläche 66 erstreckt. Weiterhin ist auf der Stützfläche 66 eine zweite Ablagefläche 76 in Form eines verfahrbaren, auf Rollen oder Kugeln 80 gelagerten Schlittens vorgesehen. Die zweite Ablagefläche 76 dient zum Ablegen des Vorsatzschneidwerks 46 und ist in Figur 4 rechts neben der ersten Ablagefläche 74 angeordnet. Ein Antrieb 78 dient dazu, die zweite Ablagefläche 76 mit dem darauf abgelegten Vorsatzschneidwerk 46 quer zur Vorwärtsfahrtrichtung des Wagens 42 zu verfahren, so daß das Vorsatzschneidwerk 46 mittels des Antriebs 78 in eine Position verbringbar ist, in der es an das Schneidwerk gekoppelt werden kann. Analog kann das Vorsatzschneidwerk 46 mittels des Antriebs 78 wieder vom Schneidwerk 48 weggefahren werden. Der Antrieb 78 arbeitet hydraulisch, elektrisch oder mechanisch, d. h. durch eine Zapfwelleneinrichtung vom Mähdrescher 10 angetrieben, oder wird manuell betätigt. Das Vorsatzschneidwerk 46 kann an der zweiten Ablagefläche 76 (durch eine nicht eingezeichnete Einrichtung) arretiert werden; auch kann die zweite Ablagefläche 76 in ihrer in Figur 4 eingezeichneten Position, die sie während des Transports des Wagens 42 einnimmt, am Wagen 42 arretiert werden.

Das Anbringen des Schneidwerks 48 am Schrägförderer 38 des Mähdreschers 10 erfolgt in dieser Ausführungsform, wie auch das Ablegen des Schneidwerks 48 auf der ersten Ablagefläche 74, wie oben bezüglich der anderen Ausführungsformen beschrieben, von der in Figur 4 links eingezeichneten Seite her. Das Vorsatzschneidwerk 46 wird, falls es zum Erntebetrieb benötigt wird, mittels des Antriebs 78 vor das Schneidwerk 48 gefahren und in an sich bekannter Weise daran befestigt. Dabei kann das Schneidwerk 48 am Schrägförderer 38 des Mähdreschers 10 befestigt, oder davon getrennt sein. Das Trennen von Schneidwerk 48 und Vorsatzschneidwerk 46 erfolgt analog in umgekehrter Reihenfolge, wobei auch dabei das Schneidwerk 48 am Schrägförderer 38 befestigt oder davon gelöst sein kann. Soll das Vorsatzschneidwerk 46 nach dem Transport wieder benutzt werden, erübrigt sich eine Trennung vom Schneidwerk 48.

## Patentansprüche

1. Wagen (42) zum Transport eines Schneidwerks (48) und eines Vorsatzschneidwerks (46), insbesondere für die Rapsernte, mit einer ersten Ablagefläche (64, 74), auf der das Schneidwerk (48) ablegbar ist, und einer zweiten Ablagefläche (64', 76), auf der das Vorsatzschneidwerk (46) getrennt vom Schneidwerk (48) ablegbar ist, **dadurch gekennzeichnet, daß** die erste Ablagefläche (74) und die zweite Ablagefläche (76) relativ zueinander bewegbar sind, so daß ein auf der zweiten Ablagefläche (76) abgelegtes Vorsatzschneidwerk (46) in Richtung auf ein auf der ersten Ablagefläche (74) abgelegtes Schneidwerk (48) zu bewegbar und daran fixierbar ist.

2. Wagen (42) nach Anspruch 1, **gekennzeichnet durch** eine Vorrichtung (50) zum Ankoppeln des Wagens (42) an ein Fahrzeug, insbesondere einen Mähdrescher (10).

3. Wagen (42) nach Anspruch 1 oder 2, **dadurch gekennzeichnet, daß** das Schneidwerk (48) und/oder das Vorsatzschneidwerk (46) auf dem Wagen (42) federnd gelagert ist.

4. Wagen (42) nach Anspruch 3, **dadurch gekennzeichnet, daß** die erste Ablagefläche (60) und/oder die zweite Ablagefläche (56) durch wenigstens eine Feder mit dem Wagen (42) verbunden ist.

5. Wagen (42) nach einem der vorhergehenden Ansprüche, **dadurch gekennzeichnet, daß** die erste Ablagefläche (64, 74) bezüglich der Fahrtrichtung des Wagens (42) seitlich neben der zweiten Ablagefläche (64', 76) angeordnet ist.

6. Wagen (42) nach einem der vorhergehenden Ansprüche, **dadurch gekennzeichnet, daß** die erste Ablagefläche (74) und die zweite Ablagefläche (76) relativ zueinander verschiebbar und/oder verschwenkbar sind.

7. Wagen (42) nach einem der Ansprüche 1 bis 6, **dadurch gekennzeichnet, daß** die erste Ablagefläche (74) bzw. das Schneidwerk (48) und/oder die zweite Ablagefläche (76) bzw. das Vorsatzschneidwerk (46) durch einen Antrieb (78) bewegbar sind.

8. Wagen (42) nach Anspruch 7, **dadurch gekennzeichnet, daß** der Antrieb (78) elektrisch und/oder hydraulisch und/oder mechanisch durch eine Erntemaschine angetrieben und/oder manuell arbeitet.

9. Wagen (42) nach einem der vorhergehenden Ansprüche, **dadurch gekennzeichnet, daß** die erste Ablagefläche (64, 74) und/oder die zweite Ablagefläche (64, 76) am Wagen (42) arretierbar ist.

10. Wagen (42) nach einem der vorhergehenden Ansprüche, **dadurch gekennzeichnet, daß** das Schneidwerk (48) an der ersten Ablagefläche (64, 74) und/oder das Vorsatzschneidwerk (46) an der zweiten Ablagefläche (64, 76) arretierbar ist.

11. Wagen (42) nach einem der vorhergehenden Ansprüche, **dadurch gekennzeichnet, daß** die erste Ablagefläche (60, 64, 74) und/oder die zweite Ablagefläche (56, 64', 76) in seitlicher Richtung geneigt sind.

## Claims

1. A waggon (42) for transporting a cutter-head (48) and an auxiliary cutter-head (46), especially for harvesting rape, with a first supporting surface (64, 74) on which the cutter-head (48) can be placed and a second supporting surface (64', 76) on which the auxiliary cutter-head (46) can be placed separately from the cutter-head (48), **characterized in that** the first supporting surface (74) and the second supporting surface (76) are movable relative to one another, so that an auxiliary cutter-head (46) placed on the second supporting surface (76) can be moved in the direction of a cutter-head (48) placed on the first supporting surface (74) and be fixed thereto.

2. A waggon (42) according to claim 1, **characterized by** a device (50) for coupling the waggon (42) to a vehicle, especially a combine harvester (10).

3. A waggon (42) according to claim 1 or 2, **characterized in that** the cutter-head (48) and/or the auxiliary cutter-head (46) is sprung mounted on the waggon (42).

4. A waggon (42) according to claim 3, **characterized in that** the first supporting surface (60) and/or the second supporting surface (56) is connected to the waggon (42) by at least one spring.

5. A waggon (42) according to any of the preceding claims, **characterized in that** the first supporting surface (64, 74) is arranged at the side relative to the direction of travel of the waggon (42) adjacent the second supporting surface (64' 76).

6. A waggon (42) according to any of the preceding claims, **characterized in that** the first supporting surface (74) and the second supporting surface (76) can slide and/or pivot relative to one another.

7. A waggon (42) according to any of claims 1 to 6, **characterized in that** the first supporting surface (74) or the cutter-head (48) and/or the second supporting surface (76) or the auxiliary cutter-head (46) can be moved by drive means (78).

8. A waggon (42) according to claim 7, **characterized in that** the drive means (78) is driven electrically and/or hydraulically and/or mechanically by a harvesting machine and/or operated manually.

9. A waggon (42) according to any of the preceding claims, **characterized in that** the first supporting surface (64, 74) and/or the second supporting surface (64, 76) can be arrested on the waggon (42).

10. A waggon (42) according to any of the preceding claims, **characterized in that** the cutter-head (48) can be arrested on the first supporting surface (64, 74) and/or the auxiliary cutter-head (46) can be arrested on the second supporting surface (64, 76).

11. A waggon (42) according to any of the preceding claims, **characterized in that** the first supporting surface (60, 64, 74) and/or the second supporting surface (56, 64', 76) are inclined in the lateral direction.

## Revendications

1. Chariot (42) de transport pour table de coupe (48) et deuxième table de coupe adaptable (46) tel qu'utilisé notamment pour la récolte du colza comprenant un premier plateau (64, 74) sur lequel la table de coupe (48) peut être déposée et un deuxième plateau (64', 76) sur lequel la deuxième table de coupe adaptable (46) peut être déposée séparément de la table de coupe (48), **caractérisé en ce que** le premier plateau (74) et le deuxième plateau (76) sont mobiles l'un par rapport à l'autre de sorte qu'une table de coupe adaptable (46) sur le deuxième plateau (76) peut être déplacée en direction d'une table de coupe (48) sur le premier plateau (74) et y être fixée.

2. Chariot (42) conforme à la revendication 1, **caractérisé par** un dispositif (50) d'attache du chariot (42) à un autre véhicule, notamment une moissonneuse-batteuse (10).

3. Chariot (42) conforme à la revendication 1 ou 2, **caractérisé en ce que** la table de coupe (48) et/ou la deuxième table de coupe adaptable (46) sont montées sur le chariot (42) au moyen de ressorts.

4. Chariot (42) conforme à la revendication 3, **caractérisé en ce que** le premier plateau (60) et/ou le deuxième plateau (56) est (sont) raccordé(s) au chariot (42) par au moins un ressort.

5. Chariot (42) conforme à l'une des revendications précédentes, **caractérisé en ce que** le premier plateau (64, 74) est placé latéralement à côté du deuxième plateau (64', 76) par rapport au sens de la marche du chariot (42).

6. Chariot (42) conforme à l'une des revendications précédentes, **caractérisé en ce que** le premier plateau (74) et le deuxième plateau (76) peuvent coulisser et/ou pivoter l'un par rapport à l'autre.

7. Chariot (42) conforme à l'une des revendications 1 à 6, **caractérisé en ce que** le premier plateau (74) et, le cas échéant, la table de coupe (48) et/ou le deuxième plateau (76) et, le cas échéant, la deuxième table de coupe adaptable (46) peuvent être déplacés au moyen d'un dispositif à entraînement (78).

8. Chariot (42) conforme à la revendication 7, **caractérisé en ce que** le dispositif à entraînement (78) est commandé électriquement et/ou hydrauliquement et/ou mécaniquement par une moissonneuse et/ou qu'il fonctionne manuellement.

9. Chariot (42) conforme à l'une des revendications précédentes, **caractérisé en ce que** le premier plateau (64, 74) et/ou le deuxième plateau (64, 76) peut(peuvent) être bloqué(s) sur le chariot (42).

10. Chariot (42) conforme à l'une des revendications précédentes, **caractérisé en ce que** la table de coupe (48) peut être bloquée sur le premier plateau (64, 74) et/ou la deuxième table de coupe adaptable (46) sur le deuxième plateau (64, 76).

11. Chariot (42) conforme à l'une des revendications précédentes, **caractérisé en ce que** le premier plateau (60, 64, 74) et/ou le deuxième plateau (56, 64', 76) est(sont) incliné(s) latéralement.
